# EUROPÄISCHE PATENTANMELDUNG

(11) **EP 3 404 500 A1**
(43) Veröffentlichungstag der Anmeldung: **21.11.2018**
(21) Anmeldenummer: 17171312.6
(22) Anmeldetag: 16.05.2017
(51) Int. Cl.: G05B 19/042, G06F 9/445, G06F 21/57, H04L 9/32

(54) **VERFAHREN ZUR ÜBERWACHUNG VON FUNKTIONSMODULEN**

(71) Anmelder: Siemens Aktiengesellschaft, 80333 München (DE)
(72) Erfinder: Cejka, Stephan, 1210 Wien (AT); Diwold, Konrad, 1180 Wien (AT); Einfalt, Alfred, 1210 Wien (AT); Frischenschlager, Albin, 1230 Wien (AT); Mosshammer, Ralf, 1020 Wien (AT)
(74) Vertreter: Maier, Daniel Oliver

(57) **Zusammenfassung**

Die Erfindung betrifft ein Verfahren zur Überwachung von Funktionsmodulen, welche in einem Energieverteilungsnetz während eines laufenden Betriebs eingesetzt werden können. Die Funktionsmodule werden in einem zentralen, digitalen Archiv zur Verfügung gestellt und verwalten. Die Funktionsmodule können von dort auf im Energieversorgungsnetz angebrachte Feldgeräte für den Betrieb bzw. zur Nutzung geladen werden. Für jedes neu entwickelte Funktionsmodul wird eine zugehörige Kommunikationsspezifikation erstellt (102) und dann das jeweilige Funktionsmodul mit der zugehörigen Kommunikationsspezifikation in das zentrale, digitale Archiv hochgeladen (103). Beim Hochladen des jeweiligen Funktionsmoduls wird anhand der zugehörigen Kommunikationsspezifikation eine Bewertung des jeweiligen Funktionsmoduls durchgeführt und das jeweilige Funktionsmodul zu einer vorgegebenen Richtlinienklasse zugeordnet (104). In Abhängigkeit von der Zuordnung des jeweiligen Funktionsmoduls zu einer der vorgegebenen Richtlinienklassen wird dann über eine sofortige Freischaltung des jeweilige Funktionsmoduls im zentralen, digitalen Archiv oder über eine zusätzliche Überprüfung des jeweilige Funktionsmoduls entschieden wird (105, 106, 108), wobei vor der Freischaltung ein spezifisches Richtlinienfilter für das jeweilige Funktionsmodul generiert und diesem vorgeschaltet wird (107).

## Beschreibung

### Technisches Gebiet

Die vorliegende Erfindung betrifft allgemein das Gebiet der Energieverteilungsnetze und der Energieversorgung. Im Speziellen bezieht sich die vorliegende Erfindung auf ein Verfahren zur Überwachung von Funktionsmodulen, welche in einem Energieverteilungsnetz während eines laufenden Betriebs eingesetzt werden können. Die Funktionsmodule werden in einem zentralen, digitalen Archiv zur Verfügung gestellt und verwaltet. Die Funktionsmodule können von dort auf im Energieversorgungsnetz angebrachte Feldgeräte für den Betrieb bzw. zur Nutzung geladen werden.

### Stand der Technik

Ein klassischer Betrieb von Energieversorgungsnetzen ist durch eine zunehmende Durchdringung mit dezentralen, meist erneuerbaren Energieerzeugungsanlagen (z.B.
Photovoltaikanlagen, Windkraftanlagen, etc.) vor große Herausforderungen gestellt. Zusätzlich führen die Entwicklung der Elektromobilität und damit eine verstärkte Substitution von anderen Energieübertragungsformen durch Elektrizität zu weiteren Herausforderungen. Als Lösung werden häufig so genannte Intelligente Stromnetze (Smart Grids) gesehen. Dabei ist insbesondere durch die dezentrale Einspeisung von z.B. Wind- und/oder Sonnenenergie die Netzstabilität gefährdet.

Die Gefährdung der Netzstabilität kann vorwiegend in zwei Bereichen auftreten. In Versorgungsnetzen im ländlichen Raum ist das vorherrschende Problem die Spannungserhaltung bzw. das so genannte U-Problem. Bei Versorgungsnetzen im urbanen Bereich, welche aufgrund der Lastdichte eher geringe Leitungslängen aufweisen, ist weniger die Spannungserhaltung, sondern vielmehr eine Auslastung der Betriebsmittel das vorherrschende Problem, welches auch als so genanntes I-Problem bezeichnet wird.

Um einen normgerechten Netzbetrieb - wie z.B. das Einhalten von Spannungsgrenzen gemäß der Norm EN50160 (z.B. Spannungsgrenzen von +/- 10% der Nennspannung) - auch bei einem vom Versorgungsanschluss des Energieversorgungsnetzes weit entfernten Teilnehmer aufrechtzuerhalten bzw. um eine Überlastung der Betriebsmittel zu verhindern und um weitere unterstützende Funktionalitäten (z.B. Spannungsregelung zur Einhaltung der Spannungsgrenzen gemäß der Norm EN50160, etc.) für einen weitgehend automatisierten Netzbetrieb zu ermöglichen, können beispielsweise aktive bzw. intelligente Netzmanagementsysteme eingesetzt werden. Dabei greift ein Netzmanagementsystem gezielt auf Erzeuger, flexible Verbraucher oder auch Energiespeicher im Netz zu und steuert diese beispielsweise mit einem so genannten Demand-Response Verfahren derart, dass der Netzbetrieb unter Einhaltung der Spannungsgrenzen aufrecht erhalten werden kann. Dabei ist für einen zukünftig weit verbreiteten Einsatz von aktiven bzw. intelligenten Netzmanagementsystemen in Energieversorgungsnetzen - insbesondere im Bereich der Mittel- und/oder Niederspannungsnetze - wichtig, dass diese eine große Flexibilität hinsichtlich zukünftig zu integrierender Funktionalitäten aufweisen.

Mittelspannungsnetze sind ein Teil des Energieversorgungsnetzes zur Verteilung von elektrischer Energie auf Strecken in einem Bereich von einigen Kilometern bis zu ca. 100 km - vorwiegend in ländlichen Bereichen. Ein Mittelspannungsnetz dient daher typischerweise der elektrischen Energieversorgung einer Region, welche beispielsweise mehrere Ortschaften oder in Städten z.B. einen Stadtteil umfasst. Als Alternative zu einem Netzausbau werden zur Spannungsbandeinhaltung in Mittelspannungsnetzen seit wenigen Jahren Erzeugern beispielsweise Vorgaben in Abhängigkeit von der Spannung gemacht. Diese Vorgaben können sich auf den Leistungs- bzw. Wirkleistungsfaktor oder den zugehörigen Messwert cos ϕ oder auch Charakteristiken der Wirk- bzw. Blindleistung beziehen. Durch Niederspannungsnetze erfolgt eine Verteilung der elektrischen Energie an die elektrischen Endverbraucher. Um Spannungsverluste zu vermeiden, sind Niederspannungsnetze in der räumlichen Ausdehnung auf einen Bereich von einigen 100 m bis zu einigen wenigen Kilometern beschränkt. Sie werden regional über Transformatorstationen (Ortsnetzstationen) aus einem übergeordneten Mittelspannungsnetz gespeist. Um einen normgerechten Netzbetrieb - auch bei einem vom Versorgungsanschluss des Niederspannungsnetzes weit entfernten Teilnehmer aufrechtzuerhalten bzw. zur Spannungsbandeinhaltung, wird derzeit vorwiegend der Ausbau des Netzes forciert.

Intelligente Netzmanagementsysteme werden heutzutage in Energieversorgungsnetzen beispielsweise insbesondere in Ausprägung von Netzleitsystemen wie z.B. Supervisory Control and Data Acquisition- (SCADA)-Systeme eingesetzt, durch welche beispielsweise ganze Mittelspannungsnetze und/oder Umspannwerke überwacht, gesteuert und geregelt werden können. Dabei werden üblicherweise Lösungen aus der etablierten Automatisierungstechnik eingesetzt wie z.B. speicherprogrammierbare Steuerungen (SPS), etc., durch welche abgesetzte Regelungen z.B. in einer Ortsnetzstation mit regelbarem Transformator umgesetzt werden. Derartige Einsatzausprägungen von intelligenten Netzmanagementsystemen weisen einen hohen Energie- und Kostenaufwand bei der Installation auf. Weiterhin können die Netzmanagementsysteme nach einer Inbetriebnahme nur mehr in einem relativ geringen Umfang geändert und/oder erweitert werden, da mögliche meist als Softwarekomponenten ausgeführte Funktionalitäten eng mit der verwendeten Hardware verknüpft sind. Allerdings sind derartige Systeme nach erfolgtem Datenpunkttests und Probebetriebsphasen üblicherweise sehr robust und weisen eine relativ geringe Fehleranfälligkeit auf.

Mittlerweise wird - insbesondere in Forschungs- und Pilotprojekten bereits verstärkt - an einer neuen Generation der Automatisierungstechnik im Energieversorgungsbereich - beispielsweise unter dem Begriff "Smart Grid" bzw. "Intelligentes Stromnetz" gearbeitet. Der Begriff "intelligentes Stromnetz" oder "Smart Grid" umfasst dabei eine kommunikative Vernetzung, Steuerung und Regelung von Stromerzeugern, Energiespeichern, elektrischen Verbrauchern und Netzbetriebsmitteln in einem Energieversorgungsnetz. Dadurch wird eine Optimierung und Überwachung der miteinander verbundenen Bestandteile des Energieversorgungsnetzes mit dem Ziel der Sicherstellung der Energieversorgung auf Basis eines effizienten und zuverlässigen Systembetriebs ermöglicht. Dabei ist beispielweise eine Entkopplung von Hardware und Softwarekomponenten eine Basisanforderung, um eine große Flexibilität in Hinblick auf zukünftig Erweiterungen und zu integrierende Funktionalitäten zu ermöglichen.

Dazu können Funktionalitäten wie z.B. Spannungsregler zum Einhalten von Spannungsgrenzen gemäß der Norm EN50160, Einheiten zum Aufzeichnen oder Auswerten von Mess- und/oder Netzdaten, etc. beispielsweise als abgeschlossene Funktionsmodule realisiert werden. Eine Menge an verfügbaren Funktionsmodulen kann z.B. an einer zentralen Ablagestelle bzw. in einem zentralen, digitalen Archiv bzw. Repository zur Verfügung gestellt werden, wobei das zentrale, digitale Archiv beispielsweise vom Betreiber des Energieversorgungsnetzes oder einem vertrauenswürdigen Dritten (z.B. Equipmenthersteller, Gerätebetreiber, etc.) verwaltet wird. Vom zentralen, digitalen Archiv können die Funktionsmodule - je nach Anwendungsfall - einzeln oder kombiniert auf die im Energieversorgungsnetz angebrachten bzw. installierten Geräte (z.B. intelligente Zähler, intelligente Ortnetzstationen oder Transformatoren, Messeinheiten für Strom und/oder Spannung, Regel- und/oder Steuereinheiten, etc.), welche auch als im Energieversorgungsnetz angebrachte Feldgeräte bezeichnet werden können, geladen werden - ähnlich z.B. den Internet-basierten digitalen Vertriebsplattformen für Applikationen oder Anwendungssoftware für Nutzer von mobilen Endgeräten (z.B. Smartphone, Tablet-PC, etc.), auf welchen Applikationen des Betreibers oder von Drittanbietern Kunden zum Laden auf das jeweilige Endgerät angeboten werden.

Bei diesen Internet-basierten Vertriebsplattformen für Endkunden bzw. für mobile Endgeräte wie z.B. Smartphones oder Tablet-PCs wirkt sich ein Installieren einer neuen Applikation üblicherweise weitgehend auf das jeweilige Endgerät des Endkunden aus. Daher erfolgt häufig eine Überprüfung der auf derartigen Internet-basierten Vertriebsplattformen angebotenen Applikationen in Hinblick auf Schadhaftigkeit oder Betrug. In Gegensatz dazu ist bei einer Installation von Funktionsmodulen aus einem zentralen, digitalen Archiv in einem Energieversorgungsnetz ein hohes Maß an Betriebssicherheit im Sinne des öffentlichen Interesses zu gewährleisten. Daher wäre es wichtig, dass ein Funktionsumfang - d.h. Datenzugriffe und/oder Steuereingriff des jeweiligen, zu Verfügung gestellten Funktionsmoduls - vorab geprüft und während des Betriebs überwacht werden. Derzeit gibt es allerdings keine ausreichenden Mechanismen für eine Prüfung des Funktionsumfangs und eine Überwachung des Betriebs von Funktionsmodulen, welche auf in einem Energieversorgungsnetz angebrachte Feldgeräte ladbar sind.

### Darstellung der Erfindung

Der Erfindung liegt daher die Aufgabe zugrunde, ein Verfahren zur Überwachung von Funktionsmodulen für einen Einsatz in einem Energieversorgungsnetz anzugeben, durch welches auf einfache Weise ein Funktionsumfang der Funktionsmodule vorab in Hinblick auf Betriebssicherheit und Datenschutzvorgaben geprüft und im laufenden Betrieb überwacht wird.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs erwähnten Art, bei welchem für jedes Funktionsmodul eine zugehörige Kommunikationsspezifikation erstellt wird und bei welchem das jeweilige Funktionsmodul mit der zugehörigen Kommunikationsspezifikation in ein zentrales, digitales Archiv hochgeladen wird. Beim Hochladen des jeweiligen Funktionsmoduls erfolgen eine Bewertung des jeweiligen Funktionsmoduls anhand der zugehörigen Kommunikationsspezifikation und eine Zuordnung zu vorgegebenen Richtlinienklassen. In Abhängigkeit der Zuordnung zu einer der vorgegebenen Richtlinienklassen wird dann über eine sofortige Freischaltung des jeweiligen Funktionsmoduls im zentralen, digitalen Register oder über eine zusätzliche Überprüfung des jeweiligen Funktionsmoduls entschieden.

Der Hauptaspekt der gegenständlichen Erfindung besteht darin, dass die Funktionsmodule unabhängig von den jeweiligen Feldgeräten, auf welche sie geladen werden können, entwickelt und in einem zentralen, digitalen Archiv zur Verfügung gestellt und verwaltet werden können, ohne dass durch einen Einsatz der Funktionsmodule auf den Feldgeräten die Betriebssicherheit des Energieversorgungsnetz gefährdet und Datensicherheitsvorgaben verletzt werden. Während der Entwicklung eines Funktionsmoduls erfolgt die Erstellung einer zugehörigen Kommunikationsspezifikation, durch welche Daten- und Steuereingriff anhand der Eingangs- und Ausgangsdaten des Funktionsmoduls beschrieben werden. Anhand dieser Kommunikationsspezifikation wird dann das Funktionsmodul bei Hochladen in das zentrale, digitale Archiv oder Repository evaluiert und einer Richtlinienklasse zugeordnet. Anhand der dem jeweiligen Funktionsmodul zugeordneten Richtlinienklasse kann dann sehr rasch und einfach entschieden, ob ein Funktionsumfang bzw. ein Kommunikationsverhalten eines jeweiligen Funktionsmodul den jeweils im Energieversorgungsnetz geltenden Sicherheits-, Datenschutz- und Kommunikationsrichtlinien entspricht oder ob einen zusätzliche, weitere Überprüfung des jeweiligen Funktionsmoduls notwendig ist, bevor das Funktionsmodul im zentralen, digitalen Archiv für eine Installation auf den Feldgeräten freigeschaltet wird.

Durch als Richtlinienklassen abgebildeten Sicherheitsvorgaben und -mechanismen können gezielt Funktionsmodule, welche beispielsweise einen sicherheitskritischen Funktionsumfang (z.B. Steuereingriff als Ausgangsdaten, etc.) aufweisen, geprüft werden, während Funktionsmodule mit geringerem oder kaum sicherheitskritischen Funktionsumfang automatisch validiert und freigeschaltet werden können. Damit können Ressourcen in der Verwaltung und im operativen Bereich des Energieversorgungsnetzes effizient eingesetzt werden. Das erfindungsgemäße Verfahren kann weiterhin eine wertvolle Unterstützung bei der Administration eines Energieversorgungsnetzes für Betreiber und für in zentralen Bereichen (z.B. Leitstellen, etc.) tätigen Mitarbeiter darstellen.

Eine zweckmäßige Weiterbildung des erfindungsgemäßen Verfahrens sieht vor, dass vor der Freischaltung des jeweiligen Funktionsmoduls ein spezifischer Richtlinienfilter auf Basis der zum jeweiligen Funktionsmodul zugehörigen Kommunikationsspezifikation generiert wird, welche dann dem jeweiligen Funktionsmodul vorgeschaltet wird. Durch den für das jeweilige Funktionsmodul spezifischen Richtlinienfilter wird dem jeweiligen Funktionsmodul ermöglicht, spezifizierte Eingangs- und Ausgangsdaten zu empfangen bzw. zu senden sowie jegliche andere Form von Kommunikation von bzw. mit dem jeweiligen Funktionsmodul zu blocken. Dazu wird der auf Basis der Kommunikationsspezifikation generierte Richtlinienfilter je nach Anforderungen des jeweiligen Funktionsmoduls entsprechend parametriert. Durch den Einsatz spezifischer Richtlinienfilter, welche den jeweiligen Funktionsmodulen vorgeschaltet sind, wird auf einfache Weise sichergestellt, dass für das jeweilige Funktionsmodul spezifische Kommunikationsrichtlinien eingehalten werden.

Es ist weiterhin vorteilhaft, wenn für die Bewertung und Zuordnung der Funktionsmodule, welche neu in das zentrale, digitale Archiv hochgeladen werden, zumindest zwei Richtlinienklassen vorgesehen sind. Eine Anzahl an Richtlinienklassen für Bewertung und Zuordnung der Funktionsmodule ist allerdings je nach Bedarf im Energieversorgungsnetz, den zentral zur Verfügung gestellten Funktionsmodulen und den zu überwachenden Kommunikationsrichtlinien frei definierbar.

Idealerweise wird bei der Zuordnung zu einer ersten Richtlinienklasse das jeweilige Funktionsmodul als unbedenklich eingestuft. Bei einer unbedenklichen Einstufung wird das jeweilige Funktionsmodul mit dem spezifischen Richtlinienfilter versehen und dann sofort im zentralen, digitalen Archiv freigeschaltet. Bei einem als unbedenklich klassifizierten Funktionsmodul können beispielsweise die erforderlichen Eingangsdaten unbedenklich sein bzw. die Daten werden z.B. vom Funktionsmodul stets lokal verarbeitet - d.h. am Feldgerät, auf welchem das Funktionsmodul ausgeführt wird, und nicht an eine übergeordnete Einheit oder ein übergeordnetes System weitergeleitet.

Bei der Zuordnung zu einer zweiten Richtlinienklasse wird das jeweilige Funktionsmodul als bedenklich eingestuft. Bei einer bedenklichen Einstufung wird eine zusätzliche Überprüfung der Funktionalität des jeweiligen Funktionsmoduls durchgeführt. Erst wenn durch die zusätzliche Überprüfung eine Unbedenklichkeit des jeweiligen Funktionsmodules festgestellt wurde, wird das jeweilige Funktionsmodul mit dem spezifischen Richtlinienfilter auf Basis der zugehörigen Kommunikationsspezifikation versehen und im zentralen, digitalen Archiv freigeschaltet. Bei einem als bedenklich klassifizierten Funktionsmodul sind beispielsweise die vom Funktionsmodul genutzten Eingangsdaten für eine lokale Nutzung am zugehörigen Feldgerät unbedenklich. Es werden aber vom Funktionsmodul beispielsweise Ausgangsdaten (z.B. Stell-oder Regeldaten, etc.) aus den Eingangsdaten generiert, von welchen z.B. direkt in einen Netzbetrieb des Energieversorgungsnetzes eingegriffen wird. Da ein Betrieb eines derartigen Funktionsmoduls den Netzbetrieb bzw. die Betriebssicherheit des Energieversorgungsnetzes gefährden kann, wird bei als "bedenklich" klassifizierten Funktionsmodulen vor einer Freischaltung eine zusätzliche Überprüfung und/oder Testung z.B. durch einen Experten vorgesehen.

Neben der ersten Richtlinienklasse zum Klassifizieren von "unbedenklichen" Funktionsmodulen und der zweiten Richtlinienklasse zum Klassifizieren von "bedenklichen" Funktionsmodulen können je nach Bedarf beliebige Richtlinienklassen dazwischen eingeführt werden, welche zumindest teilweise unbedenklichen bzw. zumindest teilweise bedenklichen Funktionsmodule zugeordnet werden können. Derartige Funktionsmodule können beispielsweise für einen lokalen Gebrauch unbedenkliche Eingangsdaten nutzen, aber z.B. als Ausgangsdaten möglicherweise datenschutzrelevante Daten an eine übergeordnete Einheit oder ein übergeordnetes System weiterleiten. Bei derartigen Funktionsmodulen müssen die Ausgangsdaten hinsichtlich geltender Datenschutzrichtlinien vor der Freischaltung geprüft werden, wobei eine derartige Prüfung z.B. automatisch mit Hilfe entsprechender Datenklassifizierung durchgeführt werden kann. Sind die Ausgangsdaten des Funktionsmoduls unbedenklich, dann kann das Funktionsmodul mit dem zugehörigen, spezifischen Richtlinienfilter versehen und freigeschaltet werden.

Während eines Betriebs - d.h. wenn das jeweilige Funktionsmodul auf ein Feldgerät im Energieversorgungsnetz geladen bzw. dort installiert wurde - ist es günstig, wenn vom spezifischen Richtlinienfilter, welcher dem jeweiligen Funktionsmodul vorgeschaltet ist, ein Kommunikationsverhalten des jeweiligen Funktionsmoduls aufgezeichnet und überprüft wird. Bei einem Verstoß gegen für das jeweilige Funktionsmodul geltende, spezifische Kommunikationsrichtlinien wird idealerweise eine Meldung an eine übergelagerte Einheit (z.B. ein Basissystem oder Betriebssystem des Feldgeräts, eine zentrale Stelle, etc.) gesendet. Durch eine derartige Meldung kann beispielsweise eine genaue Analyse des entsprechenden Funktionsmoduls und gegebenenfalls einen Überprüfung des entsprechenden Feldgeräts ausgelöst werden. Es wird damit ein korrekter und den Kommunikationsrichtlinien entsprechender Datenzugriff der im Energieversorgungsnetz verwendeten Funktionsmodule auf einfache Weise sichergestellt.

Es ist weiterhin von Vorteil, wenn das aufgezeichnete Kommunikationsverhalten der jeweiligen im Betrieb befindlichen Funktionsmodule gesammelt und zentral ausgewertet wird. Durch ein Sammeln und ein zentrale Auswertung des Kommunikationsverhaltens der im Energieversorgungsnetz eingesetzten Funktionsmodule können auf einfache Weise z.B. Fehler in Funktionsmodulen oder in Feldgeräten frühzeitig und rasch erkannt werden. Dabei können beispielsweise die aufgezeichneten Kommunikationsverhaltensdaten von Funktionsmodulen eines gleichen Typs z.B. mit Methoden des maschinellen Lernens verglichen werden, um jene Funktionsmodule und gegebenenfalls die zugehörigen Feldgeräte und/oder Sensorik zu identifizieren, welche in ihrem Verhalten besonders stark von einem Normverhalten abweichen. Bei Erkennen von Abweichungen kann beispielsweise frühzeitig eine Überprüfung der entsprechenden Feldgeräte und/oder Sensorik ausgelöst werden.

Zweckmäßiger Weise wird die Kommunikationsspezifikation für das jeweilige Funktionsmodul mit Hilfe einer domainspezifischen Beschreibungssprache durchgeführt. Ein domainspezifische Beschreibungssprache ist eine formale Sprache, welche zur Interaktion zwischen digital arbeiteten Einheiten (z.B. Computern) und dem Menschen für ein bestimmtes Problemfeld - eine so genannte Domäne - entworfen und implementiert wird und meist nicht auf eine bestimmte digitale Rechnereinheit zugeschnitten ist. Eine domainspezifische Beschreibungssprache ist beispielsweise die so genannte Web Service Description Language (WSDL), welche eine plattform-, programmiersprachen- und protokollunabhängige Beschreibungssprache für Netzwerkdienste bzw. so genannte Webservices zum Austausch von Nachricht auf Basis der so genannten Extensible Markup Language (XML) ist. WSDL ist weiterhin idealerweise ein industrieller Standard des World Wide Web Consortiums (W3C).

Als Feldgeräte, welche im Energieversorgungsnetz angebracht sind und auf welche die Funktionsmodule geladen werden können, sind vorteilhafter Weise Messeinheiten wie z.B. intelligente Zähler bzw. so genannte Smart Meter, Strom- und/oder Spannungsmesseinheiten, Regeleinheiten und Steuereinheiten wie z.B. intelligente Ortsnetzstationen, Strom- oder Spannungsregler, etc. im Energieversorgungsnetz vorgesehen.

### Kurzbeschreibung der Zeichnung

Die Erfindung wird nachfolgend in beispielhafter Weise anhand der beigefügten Figuren erläutert. Dabei zeigen:
- Figur 1: schematisch einen beispielhaften Ablauf des erfindungsgemäßen Verfahren zur Überwachung von Funktionsmodulen für einen Einsatz in einem Energieversorgungsnetz
- Figur 2: schematisch ein beispielhaftes Feldgerät mit mehreren geladenen Funktionsmodulen

### Ausführung der Erfindung

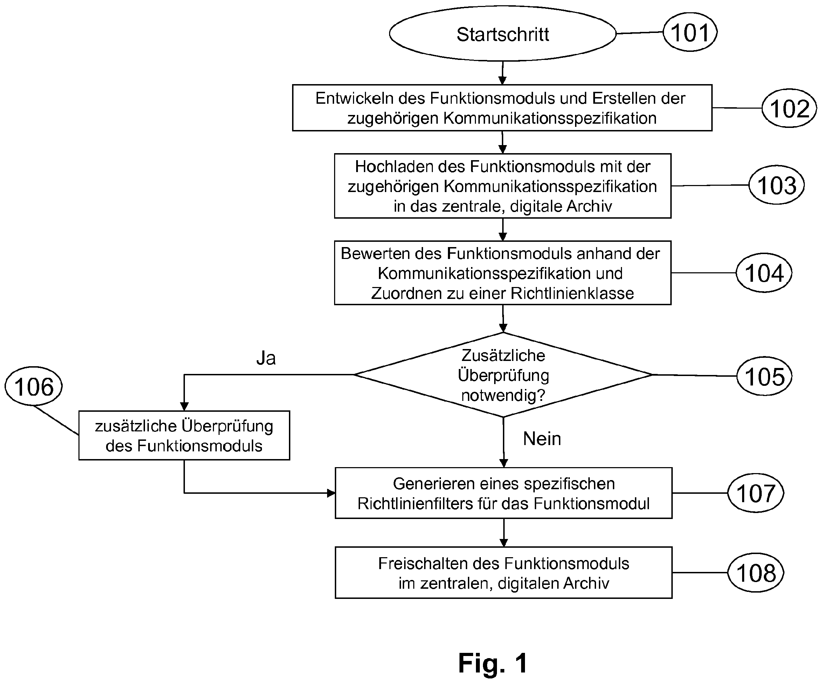

Figur 1 zeigt in schematischer Weise einen beispielhaften Ablauf eines Verfahrens zur Überwachung von Funktionsmodulen für einen Einsatz in einem Energieversorgungsnetz - insbesondere in einem Niederspannungsnetz und/oder einem Mittelspannungsnetz. Dabei können von den Funktionsmodulen Funktionalitäten wie z.B. eine Aufzeichnung von Betriebs- und Messdaten (z.B. Spannungs-/Strommesswerte, Leistungsmessdaten von an das Energieversorgungsnetz angeschlossenen Endverbrauchern, etc.) für spätere Analysezwecke oder für weiterführende Berechnungen sowie Regel- und Steuerfunktionen für einen weitestgehend automatisierten Netzbetrieb zur Verfügung gestellt werden. Die Funktionsmodule werden in einem zentralen, digitalen Archiv zur Verfügung gestellt bzw. verwaltet und sind für einen Betrieb auf im Energieversorgungsnetz angebrachte Feldgeräte ladbar. Derartige Feldgeräte sind im Energieversorgungsnetz angebrachte bzw. installierte Geräte wie z.B. im Energieversorgungsnetz angebrachte Messeinheiten (z.B. intelligente Zähler (Smart Meter), Spannungs- und/oder Strommesseinheiten, etc.) oder im Energieversorgungsnetz angebrachte Regel- und Steuereinheiten wie z.B. Spannungsregler oder andere Einheiten zum Auslösen von Aktoren, etc., durch welche ein stabiler und automatisierter Netzbetrieb ermöglicht wird.

Das erfindungsgemäße Verfahren beginnt mit einem Startschritt 101. In einem zweiten Verfahrensschritt 102 werden die Funktionsmodule z.B. von einem vertrauenswürdigen Drittentwickler erstellt. Dabei wird einem Entwickler zum Erstellen eines neuen Funktionsmoduls eine Programmierschnittstelle bzw. ein so genannten Application Programming Interface (API) des jeweiligen Feldgeräts zur Verfügung gestellt, auf welchem letztendlich das neue Funktionsmodul installiert werden bzw. ablaufen soll. Durch die Programmierschnittstelle werden einem Entwickler z.B. Informationen über z.B. Methodenaufrufe zum Senden und/oder Empfangen von Daten/Informationen eines auf dem jeweiligen Feldgerät installierten Softwaresystems zur Verfügung gestellt, sodass ein für das jeweilige Feldgerät zu entwickelndes Funktionsmodul unabhängig auf Basis der entsprechenden Programmierschnittstelle bzw. des entsprechenden API entwickelt werden kann.

Weiterhin erfolgt im zweiten Verfahrensschritt 102 während der Entwicklung des jeweiligen Funktionsmoduls auch die Erstellung einer zugehörigen Kommunikationsspezifikation. Durch die Kommunikationsspezifikation können erforderliche Eingangs- und Ausgangsdaten des jeweiligen Funktionsmoduls und damit ein Kommunikationsverhalten des jeweiligen Funktionsmoduls beschrieben werden. Die Kommunikationsspezifikation für das jeweilige Funktionsmodul wird beispielsweise mit Hilfe einer domainspezifischen Beschreibungssprache wie z.B. mit der so genannten Web Service Description Language (WSDL) durchgeführt.

Nach der Entwicklung eines neuen Funktionsmoduls wird dieses in einem dritten Verfahrensschritt 103 gemeinsam mit der zugehörigen Kommunikationsspezifikation in das zentrale, digitale Archiv bzw. Repository hochgeladen. Das zentrale, digitale Archiv ist üblicherweise eine sichere Stelle im Energieversorgungsnetz, welche beispielsweise vom Betreiber des Energieversorgungsnetzes, eines Teilenetzes oder von Geräten des Energieversorgungsnetzes verwaltet oder von einem vertrauenswürdigen Dritten (z.B. Gerätehersteller, etc.) betrieben werden kann.

Beim Hochladen bzw. beim Einbringen des neuen Funktionsmoduls in das zentrale, digitale Archiv wird in einem vierten Verfahrensschritt 104 das neue Funktionsmodul anhand der zugehörigen Kommunikationsspezifikation bzw. hinsichtlich der Eingangs- und Ausgangsdaten automatisch evaluiert und klassifiziert. D.h. das jeweilige Funktionsmodul wird aufgrund der zugehörigen Kommunikationsspezifikation zu einer von zumindest zwei oder mehr Richtlinienklassen zugeordnet. Eine Anzahl der Richtlinienklassen kann im Prinzip je nach Bedarf frei definiert werden, wobei zumindest zwei Richtlinienklassen vorgesehen sein sollten. Dadurch können Funktionsmodule beispielsweise anhand ihres Kommunikationsverhaltens zumindest als "unbedenklich" bei einer Zuordnung zu einer ersten Richtlinienklasse und als "bedenklich" bei Zuordnung zu einer zweiten Richtlinienklasse eingestuft werden. Weiterhin besteht die Möglichkeit neben diesen zwei Richtlinienklassen zumindest eine weitere Richtlinienklasse vorzusehen, durch welche Funktionsmodule anhand der zugehörigen Kommunikationsspezifikationen als z.B. "teilweise unbedenklich" bzw. "teilweise bedenklich" klassifiziert werden.

In der beispielhaft beschriebenen Ausführungsform des erfindungsgemäßen Verfahrens zur Überwachung von Funktionsmodulen sind z.B. drei Richtlinienklassen vorgesehen, welchen die jeweiligen Funktionsmodule anhand der Kommunikationsspezifikation zugeordnet werden können: die erste Richtlinienklasse für "unbedenkliche" Funktionsmodule, die zweite Richtlinienklasse für "bedenkliche Funktionsmodule und eine dritte Richtlinienklasse, welche zwischen der ersten und zweiten Richtlinienklasse liegt und welcher zum Teil unbedenkliche Funktionsmodule zugeordnet werden können.

Bei Funktionsmodulen, welche der ersten Richtlinienklasse zugeordnet bzw. als "unbedenklich" eingestuft werden, sind beispielsweise die erforderlichen Eingangsdaten unbedenklich, da von derartigen Funktionsmodulen Daten z.B. stets lokal (d.h. am jeweiligen Feldgerät, auf welchem das jeweilige Funktionsmodul abläuft) verarbeitet werden und die Daten nicht an übergelagerte Einheiten weitergereicht werden. Ein derartiges Funktionsmodul ist z.B. ein Modul zur Aufzeichnung von Daten, um Vorgänge auf dem zugehörigen Feldgerät zu analysieren.

Funktionsmodule, welche der zweiten Richtlinienklasse zugeordnet sind, werden aufgrund ihres Kommunikationsverhaltens als "bedenklich" eingestuft. Die erforderlichen Eingangsdaten für derartige Funktionsmodule können zwar z.B. für einen lokalen Gebrauch unbedenklich sein, aber von derartigen Funktionsmodulen werden beispielsweise aus den Eingangsdaten Ausgangsdaten erstellt, von welchen aktiv in den Betrieb des Energieversorgungsnetzes eingriffen wird - wie z.B. Stellbefehle für Installationen im Energieversorgungsnetz, Regeldaten für ein Abrufen von Systemdienstleistung von dezentralen Energieversorgern für z.B. eine Netzstabilisierung.

Bei Funktionsmodulen, welcher der zwischen erster und zweiter Richtlinienklasse liegenden dritten Richtlinienklasse zugeordnet werden, sind die erforderlichen Eingangsdaten z.B. für einen lokalen Gebrauch unbedenklich, aber vom Funktionsmodul werden beispielsweise datenschutzrelevante Informationen an eine übergelagerte Einheit oder ein übergelagertes System weitergeleitet. Ein derartiges Funktionsmodul ist z.B. ein Modul, durch welches Sensordaten direkt am zugehörigen Feldgerät vorverarbeitet werden und danach an ein übergeordnetes System weitergeleitet werden - wie z.B. eine Berechnung eines durchschnittlichen Phasenwinkels über einen vorgegebenen Zeitraum, eine lokale Zustandsabschätzung oder State Estimation, etc.

In einem fünften Schritt 105 wird dann anhand der dem jeweiligen Funktionsmodul zugeordneten Richtlinienklasse entschieden, ob eine zusätzliche Überprüfung des Funktionsmoduls notwendig ist oder das Funktionsmodul sofort freigeschaltet werden kann.

Wird im fünften Verfahrensschritt 105 festgestellt, dass ein Funktionsmodul als "bedenklich" eingestuft wird - d.h. der zweiten Richtlinienklasse zugeordnet worden ist, so wird in einem sechsten Verfahrensschritt 106 eine zusätzliche Überprüfung des Funktionsmoduls durchgeführt, da ein Einsatz diese Funktionsmodul gegebenenfalls die Systemsicherheit des Energieversorgungsnetz gefährden kann (z.B. durch falsch parametrierte Kontrollmechanismen). Im sechsten Verfahrensschritt 106 wird daher beispielsweise von einem Experten eine detaillierte, gegebenenfalls manuelle Überprüfung der Funktionalität durchgeführt und das als "bedenklich" eingestufte Funktionsmodul getestet, bevor eine Freischaltung im zentralen, digitalen Archiv erfolgen kann. Wird im sechsten Verfahrensschritt 106 bei der Überprüfung der Funktionalität des Funktionsmoduls die Unbedenklichkeit festgestellt, so wird vor der Freischaltung des Funktionsmoduls in einem siebenten Verfahrensschritt 107 ein spezifischer Richtlinienfilter für das Funktionsmodul automatisch generiert. Der Richtlinienfilter wird dem Funktionsmodul vorgeschaltet und je nach Anforderungen des Funktionsmoduls parametriert, um dem Funktionsmodul ein Senden von spezifizierten Eingangsdaten und ein Empfangen von spezifizierten Ausgangsdaten zu ermöglichen. Jegliche andere Form von Kommunikation durch das bzw. mit dem Funktionsmodul wird vom Richtlinienfilter blockiert. Für die Generierung des Richtlinienfilters wird die zum Funktionsmodul gehörende Kommunikationsspezifikation als Basis herangezogen. Dann wird in einem achten Verfahrensschritt 108 das Funktionsmodul im zentralen, digitalen Archiv freigeschaltet und steht zum Herunterladen auf Feldgeräte zur Verfügung.

Wurde ein Funktionsmodul als z.B. "teilweise unbedenklich" eingestuft bzw. der dritten Richtlinienklasse zugeordnet, so wird im sechsten Verfahrensschritt 106 beispielsweise eine Prüfung der Ausgangsdaten des Funktionsmoduls hinsichtlich geltender Datenschutzrichtlinien durchgeführt. Diese Überprüfung kann beispielsweise automatisch mit Hilfe einer entsprechenden Datenklassifizierung durchgeführt werden. Sind die Ausgangsdaten des Funktionsmoduls datenschutzrechtlich unbedenklich, so wird im siebenten Verfahrensschritt 107 wieder ein für das Funktionsmodul spezifischer Richtlinienfilter anhand der zum Funktionsmodul gehörenden Kommunikationsspezifikation erstellt, je nach Anforderung des Funktionsmoduls parametriert und dem Funktionsmodul vorgeschaltet. Dann wird das Funktionsmodul im achten Verfahrensschritt 108 im zentralen, digitalen Archiv für eine Nutzung auf Feldgeräten freigeschaltet.

Im Fall einer Zuordnung zur ersten Richtlinienklasse und damit einer Einstufung des jeweiligen Funktionsmoduls als "unbedenklich" ist keine zusätzliche Überprüfung des jeweiligen Funktionsmoduls notwendig. D.h. der sechste Verfahrensschritt 106 kann damit entfallen und das jeweilige Funktionsmodul kann sofort im zentralen, digitalen Archiv freigeschaltet werden. Vor der Freischaltung wird im siebenten Verfahrensschritt 107 wieder ein spezifischer Richtlinienfilter anhand der Kommunikationsspezifikation des Funktionsmoduls erstellt, je nach Anforderung des Funktionsmoduls parametriert und dem Funktionsmodul vorgeschaltet. Dann wird das Funktionsmodul im achten Verfahrensschritt 108 im zentralen, digitalen Archiv freigeschaltet.

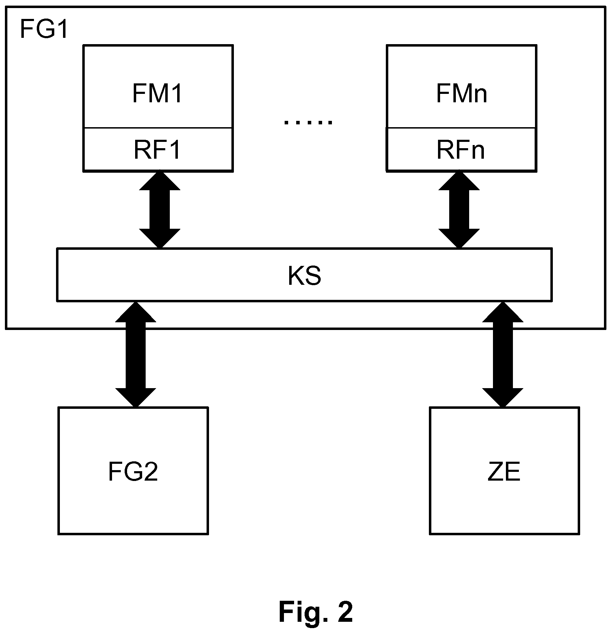

Figur 2 zeigt schematisch ein beispielhaftes erstes Feldgerät FG1 (z.B. einen intelligenten Zähler bzw. Smart Meter, eine Spannungs- und/oder Strommesseinheit oder eine Regel- bzw. Steuereinheit), welches in einem Energieversorgungsnetz angebracht ist. Vom ersten Feldgerät FG1 wird beispielsweise mit weiteren Feldgeräten wie einem beispielhaften, zweiten Feldgerät FG2 und/oder einer übergelagerten Einheit bzw. einem übergelagerten System ZE (z.B. Backend-Einheit in einer Leitstelle) kommuniziert. Vom ersten Feldgerät FG1 wird weiterhin eine Menge an Daten erfasst und/oder produziert wie z.B. durch Aufnahme von Sensorwerten, Nutzereingaben und/oder ein Auslösen von Aktoren.

Auf dem beispielhaft dargestellten, ersten Feldgerät FG1 sind Funktionsmodule FM1 bis FMn installiert, welche aus dem zentralen, digitalen Archiv auf das erste Feldgerät FG1 geladen wurden. Diesen Funktionsmodulen FM1 bis FMn stehen die vom ersten Feldgerät FG1 erfassten und/oder produzierten Daten zumindest zum Teil zur Verfügung. Je nach Funktionalität können die Funktionsmodule FM1 bis FMn beispielsweise:
- sich an einer Teilmenge der verfügbaren Daten bedienen und selbst produzierte Daten auf dem ersten Feldgerät FG1 zur Verfügung stellen
- sich einer Teilmenge der verfügbaren Daten bedienen und diese algorithmisch transformieren, wobei die neu produzierten Daten nicht am ersten Feldgerät FG1 selbst zur Verfügung gestellt, sondern an ein übergelagertes System ZE weitergeleitet werden
- sich einer Teilmenge der verfügbaren Daten bedienen und damit Aspekte eines Systemzustands des Energieversorgungsnetzes überwachen sowie bei Verletzungen geeignete Gegenmaßnahmen auslösen (z.B. Aussenden von Stellbefehlen an Installationen im Energieversorgungsnetz, Aktivierung von Steuer- und Regeleinheiten, etc.).

Die von den Funktionsmodulen FM1 bis FMn entsprechend der jeweiligen Funktionalität empfangenen und erzeugten Daten sind beispielsweise klassifizierbar. Die entsprechenden Datenklassen können z.B. im Hinblick auf ihre Relevanz für Betriebssicherheit und/oder Datenschutz eindeutig bewertet werden. Eine Klassifizierung der Daten sowie eine Bewertung der möglichen Datenklassen des ersten, beispielhaften Feldgeräts FG1 liegen sowohl auf dem ersten Feldgerät FG1 selbst wie im überlagerten System ZE (z.B. in Form einer so genannten Ontologie) vor.

Weiterhin weist das erste Feldgerät eine Kommunikationseinheit bzw. eine Kommunikationsschnittstelle KS auf, über welche eine Kommunikation der Funktionsmodule FM1 bis FMn mit anderen Funktionsmodulen auf demselben Feldgerät FG1 oder auf anderen Feldgeräten FG2 oder mit dem überlagerten System ZE erfolgen kann. Von Funktionsmodulen FM1 bis FMn wird nie direkt mit anderen Funktionsmodulen bzw. mit dem überlagerten System ZE kommuniziert.

Jedes der Funktionsmodule FM1 bis FMn hat einen spezifischen Richtlinienfilter RF1 bis RFn vorgeschaltet, durch welchen ein Kommunikationsverhalten des jeweiligen Funktionsmoduls FM1 bis FMn aufgezeichnet und überprüft wird. Bei einem Verstoß gegen für das jeweilige Funktionsmodul FM1 bis FMn spezifische Kommunikationsrichtlinien wird eine Meldung an die überlagerte Einheit bzw. an das überlagerte System ZE gesendet. Durch eine derartige Meldung kann dann beispielsweise eine genauere Analyse des entsprechenden Funktionsmoduls FM1 bis FMn ausgelöst werden.

Neben einem Einsatz der spezifischen Richtlinienfilter RF1 bis RFn der Funktionsmodule FM1 bis FMn zur Sicherstellung eines korrekten Datenzugriffs und der Betriebssicherheit des entsprechenden Feldgeräts FG1 können die aufgezeichneten Daten über das jeweilige Kommunikationsverhalten auch gesammelt und beispielsweise auf einem übergelagerten System ZE backend-seitig dazu verwendet werden, um ein Verhalten der Funktionsmodule FM1 bis FMn zu analysieren. Fehler in Funktionsmodulen FM1 bis FMn oder im untergeordneten, ersten Feldgerät FG1 können damit frühzeitig erkannt werden. Dabei können gesammelte Kommunikationsverhaltensdaten von Funktionsmodulen FM1 bis FMn des gleichen Typs z.B. mit Hilfe von Methoden des maschinellen Lernens verglichen werden, um Funktionsmodule FM1 bis FMn und damit zugehörige Feldgeräte FG1, FG2 zu identifizieren, deren Verhalten von einem üblichen Verhalten bzw. einer Norm abweicht. Aufgrund der Abweichungen können dann frühzeitig Überprüfungen der Feldgeräte FG1, FG2 bzw. der entsprechenden Funktionsmodule FM1 bis FMn sowie einer zugehörigen Sensorik (z.B. eines zugehörigen Messsystems, etc.) veranlasst werden.

## Patentansprüche

1. Verfahren zur Überwachung von Funktionsmodulen für einen Einsatz in einem Energieversorgungsnetz, wobei die Funktionsmodule in einem zentralen, digitalen Archiv zur Verfügung gestellt und verwaltet werden, und wobei die Funktionsmodule von diesem zentralen, digitalen Archiv auf im Energieversorgungsnetz angebrachte Feldgeräte ladbar sind, ***dadurch gekennzeichnet, dass*** für jedes Funktionsmodul eine zugehörige Kommunikationsspezifikation erstellt wird (102), dass das jeweilige Funktionsmodul mit der zugehörigen Kommunikationsspezifikation in das zentrale, digitale Archiv hochgeladen wird (103), dass beim Hochladen des jeweiligen Funktionsmoduls eine Bewertung des jeweiligen Funktionsmoduls anhand der zugehörigen Kommunikationsspezifikation und eine Zuordnung zu vorgegebenen Richtlinienklassen erfolgen (104), und dass in Abhängigkeit von der Zuordnung des jeweiligen Funktionsmoduls zu einer der vorgegebenen Richtlinienklassen über eine sofortige Freischaltung des jeweilige Funktionsmoduls im zentralen, digitalen Archiv oder über eine zusätzliche Überprüfung des jeweilige Funktionsmoduls entschieden wird (105, 106, 108).

2. Verfahren nach Anspruch 1, ***dadurch gekennzeichnet, dass*** vor der Freischaltung des jeweiligen Funktionsmoduls ein spezifischer Richtlinienfilter auf Basis der zum jeweiligen Funktionsmodul zugehörigen Kommunikationsspezifikation generiert wird, und dem jeweiligen Funktionsmodul vorgeschaltet wird (107).

3. Verfahren nach einem der Ansprüche 1 bis 2, ***dadurch gekennzeichnet, dass*** für die Bewertung und Zuordnung der Funktionsmodule, welche neu in das zentrale, digitale Archiv hochgeladen werden, zumindest zwei Richtlinienklassen vorgesehen sind (104).

4. Verfahren nach Anspruch 3, ***dadurch gekennzeichnet, dass*** bei der Zuordnung zu einer ersten Richtlinienklasse das jeweilige Funktionsmodul als unbedenklich eingestuft wird (104, 105), und dass das jeweilige Funktionsmodule für eine Ausbringung auf die im Energieversorgungsnetz angebrachten Feldgeräte sofort im zentralen, digitalen Archiv freigeschaltet wird (107, 108).

5. Verfahren nach Anspruch 3, ***dadurch gekennzeichnet, dass*** bei der Zuordnung zu einer zweiten Richtlinienklasse das jeweilige Funktionsmoduls als bedenklich eingestuft wird (104, 105), und dass eine zusätzliche Überprüfung einer Funktionalität des jeweiligen Funktionsmoduls durchgeführt wird (106), bevor die Freischaltung des jeweiligen Funktionsmoduls im zentralen, digitalen Archiv erfolgen kann (107, 108).

6. Verfahren nach einem der Ansprüche 2 bis 5, ***dadurch gekennzeichnet, dass*** während eines Betriebs vom jeweiligen spezifischen Richtlinienfilter ein Kommunikationsverhalten des jeweiligen Funktionsmoduls aufgezeichnet und überprüft wird, und dass bei einem Verstoß gegen für das jeweilige Funktionsmodul spezifische Kommunikationsrichtlinien eine Meldung an eine übergelagerte Einheit gesendet wird.

7. Verfahren nach Anspruch 6, ***dadurch gekennzeichnet, dass*** das aufgezeichnete Kommunikationsverhalten der in Betrieb befindlichen Funktionsmodule gesammelt und zentral ausgewertet wird.

8. Verfahren nach einem der Ansprüche 1 bis 7, ***dadurch gekennzeichnet, dass*** die Kommunikationsspezifikation für das jeweilige Funktionsmodul mit Hilfe einer domainspezifischen Beschreibungssprache durchgeführt wird (102).

9. Verfahren nach einem der Ansprüche 1 bis 8, ***dadurch gekennzeichnet, dass*** als im Energieversorgungsnetz angebrachte Feldgeräte Messeinheiten, Regeleinheiten und Steuereinheiten vorgesehen sind.
